# EUROPÄISCHE PATENTANMELDUNG

(11) **EP 3 385 499 A1**
(43) Veröffentlichungstag der Anmeldung: **10.10.2018**
(21) Anmeldenummer: 18161555.0
(22) Anmeldetag: 13.03.2018
(51) Int. Cl.: E21C 25/18, E21D 9/10, E21D 9/11, E21B 10/12, F16J 15/3232, F16J 15/34, F16C 33/78

(54) **SCHNEIDROLLE**

(30) Priorität: 04.04.2017 DE 102017205756
(71) Anmelder: Implenia Construction GmbH, 68169 Mannheim (DE)
(72) Erfinder: Henrici, Lucas, 67549 Worms (DE)
(74) Vertreter: Patent- und Rechtsanwälte Ullrich & Naumann

(57) **Zusammenfassung**

Eine Schneidrolle, insbesondere für eine Tunnelvortriebsmaschine, mit einer Achse (1) und einem auf der Achse (1) drehbar gelagerten Schneidring (2), wobei zwischen der Achse (1) und dem Schneidring (2) eine Dichteinrichtung (3) gegen ein Eindringen von Feuchtigkeit und Schmutz in einen Lagerbereich (4) für den Schneidring (2) und für ein Halten eines Schmierstoffs in dem Lagerbereich (4) angeordnet ist, ist im Hinblick auf einen sicheren und über lange Zeit andauernden Einsatz der Schneidrolle derart ausgestaltet und weitergebildet, dass die Dichteinrichtung (3) einen Dichtring (5) mit einer Dichtlippe (6) oder mehreren Dichtlippen (6) aufweist, wobei die Dichtlippe (6) oder die Dichtlippen (6) zum Gleiten an einer Gleitfläche (7) der Achse (1), an einer Gleitfläche (7) eines der Achse (1) zugeordneten Bauteils der Schneidrolle, an einer Gleitfläche (7) des Schneidrings (2) oder an einer Gleitfläche (7) eines dem Schneidring (2) zugeordneten Bauteils der Schneidrolle ausgebildet ist oder sind. Des Weiteren ist eine Tunnelvortriebsmaschine mit einer derartigen Schneidrolle angegeben.

## Beschreibung

Die Erfindung betrifft eine Schneidrolle, insbesondere für eine Tunnelvortriebsmaschine, mit einer Achse und einem auf der Achse drehbar gelagerten Schneidring, wobei zwischen der Achse und dem Schneidring eine Dichteinrichtung gegen ein Eindringen von Feuchtigkeit und Schmutz in einen Lagerbereich für den Schneidring und für ein Halten eines Schmierstoffs in dem Lagerbereich angeordnet ist.

Eine Schneidrolle der eingangs genannten Art ist beispielsweise aus der DE 10 2012 220 434 A1 bekannt. Im Konkreten zeigt dieses Dokument eine Schneidrolle 1 zum Gesteinsabbau insbesondere durch eine Tunnelvortriebsmaschine, wobei die Schneidrolle 1 eine Achse 2 und einen auf der Achse 2 drehbar gelagerten Schneidring 21 aufweist. Zwischen der Achse 2 und dem Schneidring 21 ist eine Dichteinrichtung 6, 15 gegen ein Eindringen von Feuchtigkeit und Schmutz in einen Lagerbereich für den Schneidring 21 angeordnet. Die Dichteinrichtung 6, 15 ist durch eine so genannte Gleitringdichtung gebildet, wobei metallische, geschliffene Gleitringe durch Stützringe stabilisiert axial gegeneinander gepresst werden. Im an beispielsweise eine Tunnelvortriebsmaschine montierten Zustand verbleibt beim Betrieb der Maschine ein Gleitring ortsfest zur Achse 2, wobei der andere Gleitring um die Achse 2 drehbar oder rotierbar ist. Durch diese Relativbewegung entsteht die Dichtfunktion gegen ein Eindringen von Feuchtigkeit und Schmutz in den Lagerbereich für den Schneidring.

Bei der bekannten Schneidrolle ist problematisch, dass die Dichtwirkung der Gleitringdichtung häufig nicht ausreicht, um beim Einsatz der Schneidrolle in Verbindung mit beispielsweise einer Tunnelvortriebsmaschine den in großem Umfang auftretenden Schmutz in Form von beispielsweise Gesteinspartikeln und Feuchtigkeit in ausreichender Weise davon abzuhalten, in den Lagerbereich für den Schneidring auf der Achse einzudringen. Ein derartiges Dichtungsversagen führt häufig zu einer Beschädigung und zu einem Blockieren des Lagers für den Schneidring aufgrund von Korrosion und/oder mechanischer Blockierung durch Schmutz und Gesteinspartikel. Im Ergebnis muss die herkömmliche Schneidrolle häufig vor einem erforderlichen Austausch eines durch den Betrieb abgenutzten Schneidrings hinsichtlich des Lagers für den Schneidring repariert und/oder gewartet werden.

Des Weiteren ist die bekannte Schneidrolle aufgrund der Gleitringdichtung mit ihren exakt zueinander zu positionierenden geschliffenen Gleitringen für Montagefehler äußerst anfällig und erfordert weiterhin eine sehr hohe Fertigungsgenauigkeit eines Einbauraums für die Gleitringdichtung. Als Folge ergibt sich eine komplizierte Einbaugeometrie für Gehäuse und Seitendeckel der Schneidrolle. Darüber hinaus sind die metallischen Gleitringe nicht nur korrosionsanfällig, sondern neigen bei einem längeren Nichtgebrauchen der Schneidrolle zur Adhäsion, was die Einsatzbereitschaft der Schneidrolle nach längerem Nichtgebrauchen reduziert.

Der vorliegenden Erfindung liegt daher die Aufgabe zugrunde, eine Schneidrolle der eingangs genannten Art derart auszugestalten und weiterzubilden, dass ein sicherer und über lange Zeit andauernder Einsatz der Schneidrolle mit konstruktiv einfachen Mitteln ermöglicht ist.

Erfindungsgemäß wird die voranstehende Aufgabe durch eine Schneidrolle mit den Merkmalen des Anspruch 1 gelöst. Danach ist die Schneidrolle derart ausgestaltet und weitergebildet, dass die Dichteinrichtung einen Dichtring mit einer Dichtlippe oder mehreren Dichtlipppen aufweist, wobei die Dichtlippe oder die Dichtlipppen zum Gleiten an einer Gleitfläche der Achse, an einer Gleitfläche eines der Achse zugeordneten Bauteils der Schneidrolle, an einer Gleitfläche des Schneidrings oder an einer Gleitfläche eines dem Schneidring zugeordneten Bauteils der Schneidrolle ausgebildet ist oder sind.

In erfindungsgemäßer Weise ist zunächst erkannt worden, dass durch geschickte Ausgestaltung der Dichteinrichtung die voranstehende Aufgabe auf überraschend einfache Weise gelöst wird. In weiter erfindungsgemäßer Weise ist dann erkannt worden, dass die bekannte, metallische Gleitringe aufweisende Gleitringdichtung nicht nur zu überarbeiten ist, sondern dass ein komplett anderes Dichtsystem erforderlich ist, um die gewünschten Vorteile zu erreichen.

Hierzu ist in weiter erfindungsgemäßer Weise im Konkreten eine Dichteinrichtung installiert, die einen Dichtring mit einer Dichtlippe oder mehreren Dichtlippen aufweist. Diese Dichtlippe oder Dichtlippen sind zum Gleiten an einer Gleitfläche der Achse, eines der Achse zugeordneten Bauteils der Schneidrolle, des Schneidrings oder eines dem Schneidring zugeordneten Bauteils der Schneidrolle ausgebildet. Die Dichtlippe oder die Dichtlippen gewährleisten eine hohe Dichtungszuverlässigkeit sowohl beim Nichtgebrauchen als auch insbesondere beim Einsatz der Schneidrolle, wobei sie ein Eindringen von Feuchtigkeit oder Schmutz in den Lagerbereich weitestgehend verhindern und ein Halten von Schmierstoff, z.B. Öl oder Fett, in dem Lagerbereich gewährleisten. Ein Austritt von Schmierstoff wird weitestgehend verhindert. Dabei ist für eine sichere Dichtwirkung wesentlich, dass die Dichtlippe oder die Dichtlippen im Bereich der Gleitfläche wirken, wobei es nicht auf eine exakte Positionierung der Dichtlippe oder Dichtlippen auf der Gleitfläche ankommt, solange die Dichtlippe oder die Dichtlippen überhaupt noch im Bereich der Gleitfläche angeordnet sind und auf dieser wirken. Insoweit ist die erfindungsgemäße Schneidrolle wesentlich weniger anfällig für Montagefehler als die aus dem Stand der Technik bekannte Schneidrolle. Als Folge ist auch die Herstellung des Einbauraums deutlich vereinfacht. Der Dichtring ist im montierten Zustand im Wesentlichen zwischen der Achse und dem Schneidring oder zwischen der Achse oder dem Schneidring zugeordneten Bauteilen der Schneidrolle angeordnet. Dabei dreht sich der Dichtring mit entweder der Achse oder dem Schneidring mit und gleitet an dem jeweils nicht drehenden Bauteil entlang der Gleitfläche.

Folglich ist mit der erfindungsgemäßen Schneidrolle eine Schneidrolle angegeben, bei der ein sicherer und über lange Zeit andauernder Einsatz mit konstruktiv einfachen Mitteln ermöglicht ist.

In konstruktiv besonders einfacherer Weise kann die Dichtlippe oder können die Dichtlippen integral mit dem Dichtring ausgebildet sein. Hierdurch ist eine besonders sichere Dichtwirkung und Dichtungszuverlässigkeit erreichbar, da keine Kontaktstellen oder Verbindungsbereiche zwischen den Dichtlippen und einem Ringbereich des Dichtrings aufbrechen können.

Grundsätzlich kann der Dichtring eine für das Erreichen einer sicheren Dichtwirkung geeignete Flexibilität oder Elastizität aufweisen, so dass aufgrund der Flexibilität oder Elastizität ein weitestgehend permanenter Kontakt der Dichtlippe oder der Dichtlippen mit der Gleitfläche im montierten Zustand der Schneidrolle gewährleistet ist. In besonders vorteilhafter Weise kann der Dichtring aus einem PTFE-Compound, Polytetrafluorethylen-Compound, oder aus einer PTFE-Verbindung hergestellt sein oder einen PTFE-Compound oder eine PTFE-Verbindung aufweisen. Die mechanischen und chemischen Eigenschaften dieses Werkstoffs sind für den Einsatz bei einer Schneidrolle zur Abdichtung eines Lagerbereichs für den Schneidring besonders günstig. Ein derart hergestellter Dichtring zeigt keine Korrosion und keine Neigung zur Adhäsion. Insoweit ist ein hohes Maß an Notlaufsicherheit bei einer Mangelschmierungssituation gewährleistet. Die Trockenlaufeigenschaften sind sehr gut. Des Weiteren zeigt ein derart hergestellter Dichtring sehr gute tribologische Eigenschaften mit einem geringen Losbrech- sowie Drehmoment. Des Weiteren ist eine hohe Medienbeständigkeit gewährleistet. Ein derartiger PTFE-Compound weist PTFE als Grundmaterial auf, das durch ein Beimischen von Füllstoffen mit ganz bestimmten Eigenschaften optimiert ist. Der Füllstoffanteil liegt meist zwischen 5 und 40%. Als Füllstoffe haben sich Graphit, Glas, Kohle/Koks, Bronze und Edelstahl als besonders geeignet erwiesen. Insbesondere Graphit verbessert die Gleiteigenschaften des PTFE weiter, was den Vorteil eines geringen Abriebs auf metallischen Gleitflächen zur Folge hat.

Zur Erhöhung der mechanischen Stabilität kann der Dichtring ein Verstärkungselement aufweisen, das beispielsweise durch einen vorzugsweise offenen Metallring gebildet sein kann, der in eine geeignete Nut oder Ausnehmung des Dichtrings eingeklemmt oder eingespannt sein kann. Eine derartige Verstärkung vereinfacht die Montage und stabilisiert den Sitz des Dichtrings im montierten Zustand der Schneidrolle.

Weiterhin im Hinblick auf eine besonders hohe Dichtungszuverlässigkeit und Dichtwirkung kann die Dichtlippe oder können die Dichtlippen im montierten Zustand der Schneidrolle zumindest geringfügig gegen die Gleitfläche gepresst oder vorgespannt sein. Durch das Anpressen oder Vorspannen der Dichtlippe oder der Dichtlippen ist eine nahezu permanente Kontaktierung der Gleitfläche durch die Dichtlippe oder Dichtlippen gewährleistet, so dass ein Eindringen unerwünschter Substanzen oder Partikel in den Lagerbereich für den Schneidring sicher vermieden werden kann. Die Anpressung oder Vorspannung der Dichtlippe oder der Dichtlippen gegen die Gleitfläche kann durch eine klemmende Montage des Dichtrings in einen geeigneten Einbauraum für den Dichtring gewährleistet werden, der einen Einbau des Dichtrings ausschließlich in einem gepressten oder vorgespannten Zustand der Dichtlippe oder der Dichtlippen zulässt. Diesbezüglich sei noch erwähnt, dass die Dichtwirkung und Dichtungszuverlässigkeit grundsätzlich mit der Anzahl an Dichtlippen steigt. Des Weiteren ist bei dem verwendeten Dichtring vorteilhaft, dass dieser und die damit realisierte Dichteinrichtung progressiv auf einen Druck von außen reagieren, d.h. die Dichtwirkung nimmt mit steigendem Umgebungsdruck zu. Dabei wirken die geschwungenen Dichtlippen mit größerer Kraft auf die Gleitfläche, was in einem geringen Anstieg des Drehmoments beim Drehen des Schneidrings auf der Achse messbar ist. Die herkömmliche, metallische Gleitringdichtung reagiert hingegen progressiv bei einem Druck von innen. Eine Erhöhung des Innendrucks ergibt sich jedoch nur in sehr geringem Umfang durch einen Anstieg der Innentemperatur beim Betrieb. Der Außendruck ist die entscheidende Größe und kann sich folglich bei dem erfindungsgemäßen Dichtungskonzept weit umfangreicher und in besonders vorteilhafter Weise auswirken.

Die Dichtlippe oder die Dichtlippen können im montierten Zustand der Schneidrolle alternativ in radialer oder in axialer Richtung der Achse gegen die Gleitfläche gepresst oder vorgespannt sein. In entsprechender Weise kann sich die Gleitfläche in axialer oder in radialer Richtung der Achse erstrecken. Beispielsweise kann sich die Gleitfläche entlang eines äußeren Umfangs der Achse oder eines der Achse zugeordneten Bauteils der Schneidrolle erstrecken. In diesem Fall wäre die Dichtlippe oder wären die Dichtlippen in radialer Richtung der Achse gegen die Gleitfläche gepresst oder vorgespannt.

Je nach Konstruktion der Achse und des Schneidrings kann die Dichtlippe oder können die Dichtlippen an einem inneren oder an einem äußeren Umfang des Dichtrings ausgebildet sein oder sich in einer axialen Richtung des Dichtrings erstrecken, um ein sicheres Gleiten an der Gleitfläche zu gewährleisten. Bei der konkreten Ausgestaltung des Dichtrings und der entsprechenden Anordnung der Dichtlippe oder Dichtlippen ist auf den jeweiligen Anwendungsfall abzustellen.

Im Hinblick auf einen sicheren und zuverlässig dichtenden Kontakt des Dichtrings mit der Schneidrolle an der der Dichtlippe oder den Dichtlippen abgewandten Seite des Dichtrings kann der Dichtring an einem äußeren Umfang oder an einem inneren Umfang oder an einer Seite mindestens einen in vorzugsweise einer umlaufenden Nut des Dichtrings angeordneten O-Ring aufweisen. Ein derartiger O-Ring kann eine ungewünschte Relativbewegung zwischen dem Schneidring oder der Achse und dem Dichtring in sicherer Weise verhindern oder zumindest weitestgehend verhindern, so dass eine sichere Mitführung des Dichtrings mit dem entsprechenden Bauteil der Schneidrolle gewährleistet ist.

Bei einer konkreten Ausgestaltung der Schneidrolle kann die Gleitfläche an einem Gehäuse, Deckel oder Rollengrundkörper der Schneidrolle ausgebildet sein. Im Hinblick auf eine geeignete Ausbildung der Gleitfläche ist auf den jeweiligen konkreten Anwendungsfall abzustellen.

Hinsichtlich einer sicheren Positionierung des Dichtrings und damit im Hinblick auf eine sichere Dichtwirkung kann der Dichtring in einer Ausnehmung oder Nut eines Gehäuses, Deckels oder Rollengrundkörpers der Schneidrolle angeordnet sein. Ein besonders sicherer Sitz des Dichtrings an oder in der Schneidrolle ist hierdurch erreichbar.

Die erfindungsgemäße Schneidrolle ist in besonders vorteilhafter Weise bei einer Tunnelvortriebsmaschine nach Anspruch 10 einsetzbar. Eine mit einer erfindungsgemäßen Schneidrolle oder mit mehreren erfindungsgemäßen Schneidrollen ausgerüstete Tunnelvortriebsmaschine ist auf sichere Art und Weise und über eine lange Zeit hinweg ohne ein Reparatur- oder Wartungserfordernis hinsichtlich der Schneidrollen betreibbar.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer teilweise geschnittenen Darstellung ein erstes Ausführungsbeispiel der erfindungsgemäßen Schneidrolle,
- Fig. 2: in einer teilweise geschnittenen Darstellung ein zweites Ausführungsbeispiel der erfindungsgemäßen Schneidrolle,
- Fig. 3: in einer teilweise geschnittenen Darstellung ein drittes Ausführungsbeispiel der erfindungsgemäßen Schneidrolle und
- Fig. 4: in einer teilweise geschnittenen Darstellung eine herkömmliche Schneidrolle.

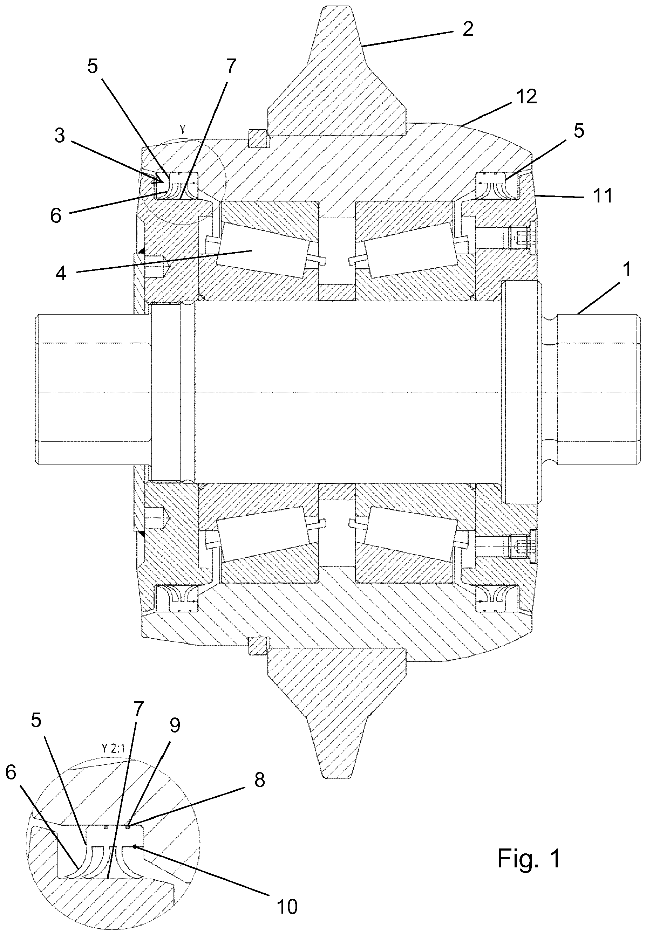

Fig. 1 zeigt in einer teilweise geschnittenen Darstellung ein erstes Ausführungsbeispiel der erfindungsgemäßen Schneidrolle, die bei einer Tunnelvortriebsmaschine zum Einsatz kommen kann. Die Schneidrolle weist eine Achse 1 und einen auf der Achse 1 drehbar gelagerten Schneidring 2 auf, wobei zwischen der Achse 1 und dem Schneidring 2 eine Dichteinrichtung 3 gegen ein Eindringen von Feuchtigkeit und Schmutz in einen Lagerbereich 4 für den Schneidring 2 angeordnet ist. Der Lagerbereich 4 weist Lagerrollen für eine sichere Drehlagerung des Schneidrings 2 auf der Achse 1 auf.

Im Hinblick auf einen sicheren und über lange Zeit andauernden Einsatz der Schneidrolle weist die Dichteinrichtung 3 in konstruktiv einfacher Weise einen Dichtring 5 mit mehreren Dichtlippen 6 auf, wobei der Dichtring 5 dieses Ausführungsbeispiels drei Dichtlippen 6 aufweist, von denen zwei in eine Richtung und eine in eine entgegengesetzte Richtung gebogen sind. Die Dichtlippen 6 sind zum Gleiten an einer Gleitfläche 7 eines Deckels 11 der Schneidrolle ausgebildet, wobei der Deckel 11 ortsfest zur Achse 1 angeordnet ist und sich bei einem Drehen des Schneidrings 2 nicht mit dem Schneidring 2 und dem Dichtring 5 mitdreht.

Die Dichtlippen 6 sind integral mit dem Dichtring 5 ausgebildet, wobei der Dichtring 5 insgesamt aus einem PTFE-Compound hergestellt ist.

Im montierten Zustand sind die Dichtlippen 6 zumindest geringfügig gegen die Gleitfläche 7 gepresst oder vorgespannt, so dass eine sichere Abdichtung erreicht ist. Dabei sind die Dichtlippen 6 bei diesem ersten Ausführungsbeispiel in radialer Richtung der Achse 1 gegen die Gleitfläche 7 gepresst oder vorgespannt.

In der im unteren Bereich der Fig. 1 vergrößerten Teildarstellung des Bereichs des Dichtrings 5 ist besonders gut erkennbar, dass die Dichtlippen 6 an einem inneren Umgang des Dichtrings 5 ausgebildet sind und der Dichtring 5 an einem äußeren Umfang zwei in zwei umlaufenden Nuten 8 des Dichtrings 5 angeordnete O-Ringe 9 aufweist. Des Weiteren weist der Dichtring 5 ein Verstärkungselement 10 auf, das durch einen offenen Metallring oder Federstahlring gebildet sein kann, der entlang dem inneren Umfang des Dichtrings 5 verläuft. Dieses Verstärkungselement 10 kann ebenfalls in einer Nut in dem Dichtring 5 angeordnet sein.

Dem Schneidring 2 ist ein Rollengrundkörper 12 zugeordnet, der sich mit dem Schneidring 2 und dem Dichtring 5 beim Drehen des Schneidrings 2 auf der Achse 1 mitdreht.

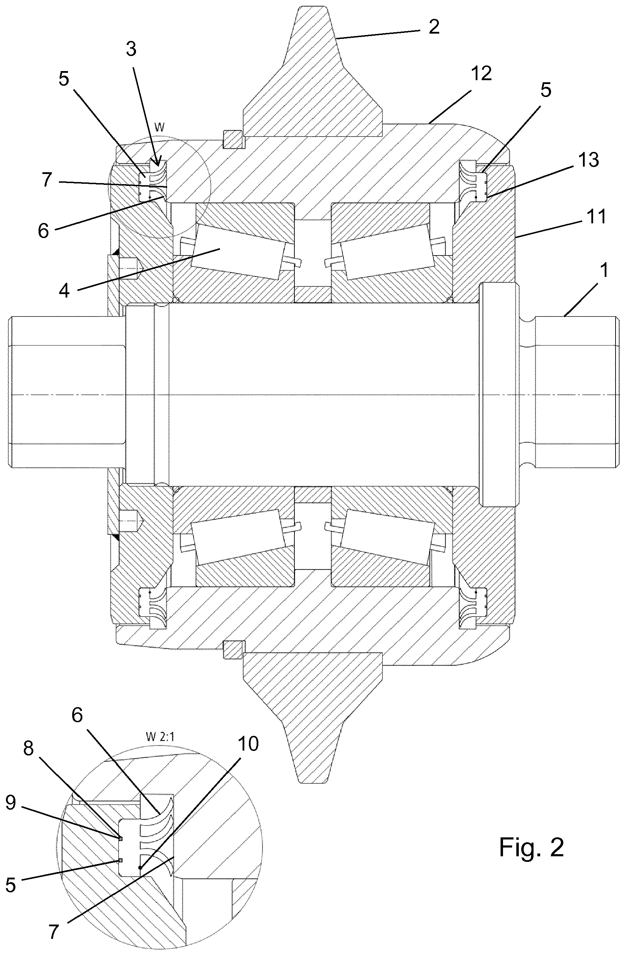

Fig. 2 zeigt in einer teilweise geschnittenen Darstellung ein zweites Ausführungsbeispiel der erfindungsgemäßen Schneidrolle. Das zweite Ausführungsbeispiel entspricht in seinem Aufbau im Wesentlichen dem ersten Ausführungsbeispiel, wobei die Dichteinrichtung 3 mit dem Dichtring 5 unterschiedlich ausgebildet ist. Im Konkreten ist der Dichtring 5 in einer Ausnehmung 13 eines Deckels 11 angeordnet. Des Weiteren erstrecken sich die Dichtlippen 6 des Dichtrings 5 in einer axialen Richtung des Dichtrings 5, wobei die Dichtlippen 6 im montierten Zustand der Schneidrolle in axialer Richtung der Achse 1 gegen eine Gleitfläche 7 gepresst sind, die an einem Rollengrundkörper 12 ausgebildet ist.

Bei diesem Ausführungsbeispiel dreht sich der Dichtring 5 beim Drehen des Schneidrings 2 auf der Achse 1 nicht mit dem Schneidring 2 mit. Vielmehr gleiten die Dichtlippen 6 bei Drehen des Schneidrings 2 an der Gleitfläche 7 des Rollengrundkörpers 12, der dem Schneidring 2 zugeordnet ist.

Ansonsten entsprechen die mit gleichen Bezugsziffern wie in Fig. 1 bezeichneten Bauteile der Schneidrolle des zweiten Ausführungsbeispiels den entsprechenden Bauteilen des ersten Ausführungsbeispiels, so dass auf eine diesbezügliche nochmalige Beschreibung zur Vermeidung von Wiederholungen an dieser Stelle verzichtet wird.

Auch der Dichtring 5 des zweiten Ausführungsbeispiels ist aus einem PTFE-Compound hergestellt, wobei der Dichtring 5 zusätzlich zwei O-Ringe 9 und ein Verstärkungselement 10 aufweist. Die O-Ringe 9 können bei allen Ausführungsbeispielen aus Gummi oder Kunststoff hergestellt sein. Das Verstärkungselement 10 kann aus Metall - wie bereits zum ersten Ausführungsbeispiel beschrieben - hergestellt sein.

Der Dichtring 5 kann als Radialwellendichtring bezeichnet werden, wobei er durch radiale - Ausführungsbeispiele 1 und 3 - oder axiale - Ausführungsbeispiel 2 - Kompression der Dichtlippen 6 auf einer Gegenlauffläche oder Gleitfläche 7 und durch O-Ringe 9 dichtet.

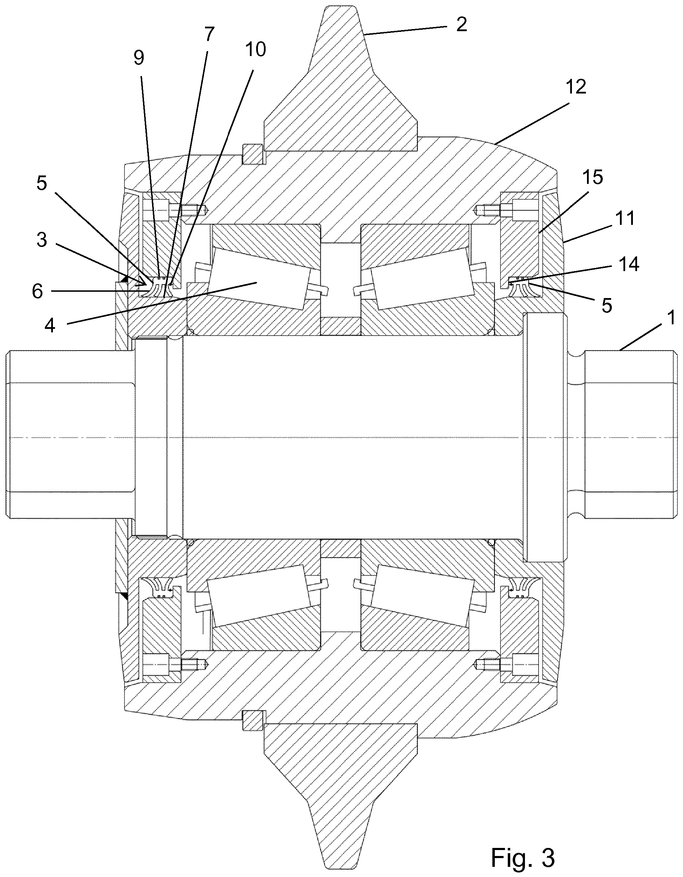

Fig. 3 zeigt in einer teilweise geschnittenen Darstellung ein drittes Ausführungsbeispiel der erfindungsgemäßen Schneidrolle. Das dritte Ausführungsbeispiel entspricht in seinem Aufbau - wie das zweite Ausführungsbeispiel - im Wesentlichen dem ersten Ausführungsbeispiel, wobei eine Dichteinrichtung 3 mit dem Dichtring 5 unterschiedlich ausgebildet ist. Im Konkreten ist der Dichtring 5 in einer Ausnehmung 14 eines Bauteils 15 angeordnet, das einem Rollengrundkörper 12 zugeordnet ist und sich beim Drehen des Schneidrings 2 mit dem Schneidring 2 relativ zur Achse 1 dreht.

Die Dichtlippen 6 des Dichtrings 5 erstrecken sich in einer radialen Richtung des Dichtrings 5 wie beim ersten Ausführungsbeispiel, wobei die Dichtlippen 6 im montierten Zustand der Schneidrolle im Konkreten in radialer Richtung der Achse 1 gegen eine Gleitfläche 7 gepresst sind, die an dem Deckel 11 ausgebildet ist.

Bei diesem dritten Ausführungsbeispiel dreht sich der Dichtring 5 beim Drehen des Schneidrings 2 auf der Achse 1 mit dem Schneidring 2 mit. Die Dichtlippen 6 gleiten beim Drehen des Schneidrings 2 an der Gleitfläche 7 des Deckels 11, der der Achse 1 zugeordnet ist.

Ansonsten entsprechen die mit gleichen Bezugsziffern wie in Fig. 1 bezeichneten Bauteile der Schneidrolle des dritten Ausführungsbeispiels den entsprechenden Bauteilen des ersten Ausführungsbeispiels, so dass auf eine diesbezügliche nochmalige Beschreibung zur Vermeidung von Wiederholungen an dieser Stelle verzichtet wird. Auch der Dichtring 5 des dritten Ausführungsbeispiels ist aus einem PTFE-Compund hergestellt, wobei der Dichtring 5 zusätzlich zwei O-Ringe 9 und ein Verstärkungselement 10 aufweist. Die O-Ringe 9 können aus Gummi oder Kunststoff hergestellt sein. Das Verstärkungselement 10 kann aus Metall - wie bereits zum ersten Ausführungsbeispiel beschrieben - hergestellt sein.

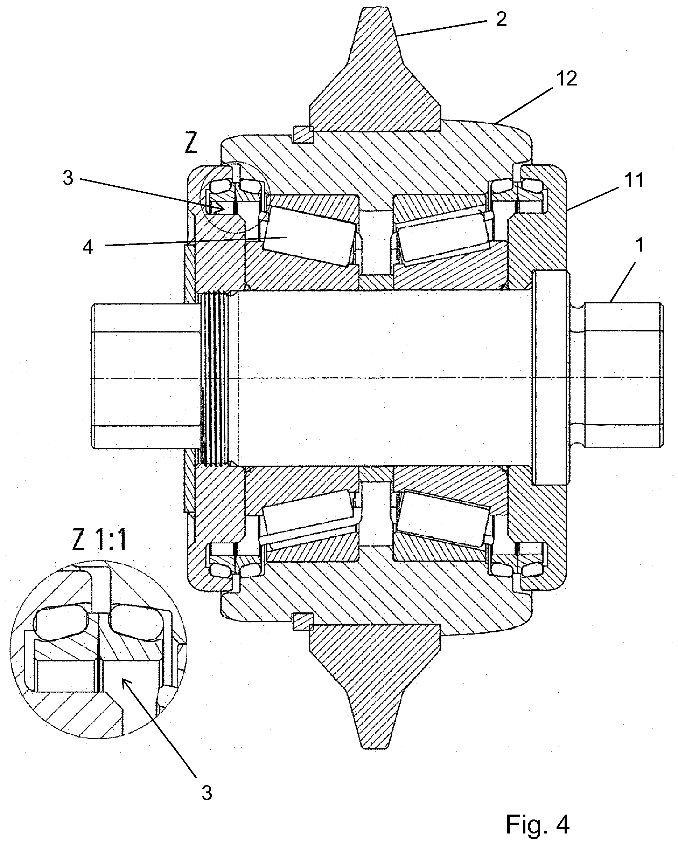

Fig. 4 zeigt in einer teilweise geschnittenen Darstellung eine weitere herkömmliche Schneidrolle, die eine Achse 1 und einen Schneidring 2 aufweist, der auf der Achse 1 drehbar gelagert ist. Zwischen der Achse 1 und dem Schneidring 2 ist eine Dichteinrichtung 3 gegen ein Eindringen von Feuchtigkeit und Schmutz in einen Lagerbereich 4 für den Schneidring 2 angeordnet. Die bekannte Dichteinrichtung 3 umfasst eine Gleitringdichtung mit metallischen, geschliffenen Gleitringen. Die bekannte Schneidrolle weist einen der Achse 1 zugeordneten Deckel 11 und einen dem Schneidring 2 zugeordneten Rollengrundkörper 12 auf, der sich beim Drehen des Schneidrings 2 um die Achse 1 mit dem Schneidring 2 mitdreht. Der Deckel 11 verbleibt beim Drehen des Schneidrings 2 ortsfest mit der Achse 1.

Hinsichtlich weiterer vorteilhafter Ausgestaltungen der erfindungsgemäßen Schneidrolle wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Achse
- 2: Schneidring
- 3: Dichteinrichtung
- 4: Lagerbereich
- 5: Dichtring
- 6: Dichtlippe
- 7: Gleitfläche
- 8: Nut
- 9: O-Ring
- 10: Verstärkungselement
- 11: Deckel
- 12: Rollengrundkörper
- 13: Ausnehmung
- 14: Ausnehmung
- 15: Bauteil

## Patentansprüche

1. Schneidrolle, insbesondere für eine Tunnelvortriebsmaschine, mit einer Achse (1) und einem auf der Achse (1) drehbar gelagerten Schneidring (2), wobei zwischen der Achse (1) und dem Schneidring (2) eine Dichteinrichtung (3) gegen ein Eindringen von Feuchtigkeit und Schmutz in einen Lagerbereich (4) für den Schneidring (2) und für ein Halten eines Schmierstoffs in dem Lagerbereich (4) angeordnet ist,
**dadurch gekennzeichnet, dass** die Dichteinrichtung (3) einen Dichtring (5) mit einer Dichtlippe (6) oder mehreren Dichtlippen (6) aufweist, wobei die Dichtlippe (6) oder die Dichtlippen (6) zum Gleiten an einer Gleitfläche (7) der Achse (1), an einer Gleitfläche (7) eines der Achse (1) zugeordneten Bauteils der Schneidrolle, an einer Gleitfläche (7) des Schneidrings (2) oder an einer Gleitfläche (7) eines dem Schneidring (2) zugeordneten Bauteils der Schneidrolle ausgebildet ist oder sind.

2. Schneidrolle nach Anspruch 1, **dadurch gekennzeichnet, dass** die Dichtlippe (6) oder die Dichtlippen (6) integral mit dem Dichtring (5) ausgebildet ist oder sind.

3. Schneidrolle nach Anspruch 1 oder 2, **dadurch gekennzeichnet, dass** der Dichtring (5) aus einem PTFE-Compound oder aus einer PTFE-Verbindung hergestellt ist oder einen PTFE-Compound oder eine PTFE-Verbindung aufweist, wobei der Dichtring (5) vorzugsweise ein Verstärkungselement (10) aufweist.

4. Schneidrolle nach einem der Ansprüche 1 bis 3, **dadurch gekennzeichnet, dass** die Dichtlippe (6) oder die Dichtlippen (6) im montierten Zustand der Schneidrolle zumindest geringfügig gegen die Gleitfläche (7) gepresst oder vorgespannt ist oder sind.

5. Schneidrolle nach einem der Ansprüche 1 bis 4, **dadurch gekennzeichnet, dass** die Dichtlippe (6) oder die Dichtlippen (6) im montierten Zustand der Schneidrolle in radialer oder in axialer Richtung der Achse (1) gegen die Gleitfläche (7) gepresst oder vorgespannt ist oder sind.

6. Schneidrolle nach einem der Ansprüche 1 bis 5, **dadurch gekennzeichnet, dass** die Dichtlippe (6) oder die Dichtlippen (6) an einem inneren oder an einem äußeren Umfang des Dichtrings (5) ausgebildet ist oder sind oder sich in einer axialen Richtung des Dichtrings (5) erstreckt oder erstrecken.

7. Schneidrolle nach einem der Ansprüche 1 bis 6, **dadurch gekennzeichnet, dass** der Dichtring (5) an einem äußeren Umfang oder an einem inneren Umfang oder an einer Seite mindestens einen in vorzugsweise einer umlaufenden Nut (8) des Dichtrings (5) angeordneten O-Ring (9) aufweist.

8. Schneidrolle nach einem der Ansprüche 1 bis 7, **dadurch gekennzeichnet, dass** die Gleitfläche (7) an einem Gehäuse, Deckel (11) oder Rollengrundkörper (12) der Schneidrolle ausgebildet ist.

9. Schneidrolle nach einem der Ansprüche 1 bis 8, **dadurch gekennzeichnet, dass** der Dichtring (5) in einer Ausnehmung (13) oder Nut eines Gehäuses, Deckels (11) oder Rollengrundkörpers (12) der Schneidrolle angeordnet ist.

10. Tunnelvortriebsmaschine mit einer Schneidrolle nach einem der Ansprüche 1 bis 9.
